# EUROPÄISCHE PATENTSCHRIFT

(11) **EP 3 223 983 B1**
(45) Veröffentlichungstag und Bekanntmachung des Hinweises auf die Patenterteilung: **04.03.2020**
(21) Anmeldenummer: 15817051.4
(22) Anmeldetag: 23.11.2015
(51) Int. Cl.: B23C 5/10, B23C 5/22

(54) **WERKZEUG FÜR DIE ZERSPANENDE BEARBEITUNG**
MACHINING TOOL
OUTIL POUR L'USINAGE PAR ENLÈVEMENT DE COPEAUX

(30) Priorität: 24.11.2014 AT 4062014 U
(43) Veröffentlichungstag der Anmeldung: 04.10.2017
(73) Patentinhaber: Ceratizit Austria Gesellschaft M.b.H., 6600 Reutte (AT)
(72) Erfinder: BURTSCHER, Peter, A-6651 Häselgehr (AT); PRAST, Josef, A-6600 Pflach (AT)
(74) Vertreter: Ciesla, Dirk
(86) Internationale Anmeldenummer: PCT/AT2015/000149
(87) Internationale Veröffentlichungsnummer: WO 2016/081964

(56) Entgegenhaltungen:
- EP-A1- 0 037 554
- EP-A1- 1 283 082
- EP-A2- 0 269 918
- WO-A1-97/39849
- GB-A- 2 041 797
- US-A- 3 341 920
- US-A- 3 540 102
- US-A- 5 542 793

## Beschreibung

Die vorliegende Erfindung betrifft ein Werkzeug gemäß dem Oberbegriff des Anspruchs 1 für die zerspanende Bearbeitung mit einem Grundkörper, der eine Rotationsachse bestimmt, um die das Werkzeug im Betrieb rotiert, zumindest einem an dem Grundkörper ausgebildeten Sitz zur Aufnahme eines auswechselbaren Schneideinsatzes, einer Befestigungsschraube zur Befestigung des Schneideinsatzes an dem Sitz und einem an dem Sitz befestigten Schneideinsatz. Ein Beispiel eines solchen Werkzeugs ist aus der GB 2 041 797 A bekannt.

Bei der zerspanenden Bearbeitung von insbesondere metallischen Materialien kommen häufig Werkzeuge zum Einsatz, die einen Grundkörper aus einem relativ zähen Material, wie insbesondere Werkzeugstahl, und einen oder mehrere an dem Grundkörper befestigte Schneideinsätze aus einem harten und verschleißbeständigen Material, wie insbesondere Hartmetall (cemented-carbide), Cermet oder einer Schneidkeramik, aufweisen. Der Grundkörper ist dabei dazu ausgebildet, an einer Werkzeugmaschine, wie insbesondere einer Fräsmaschine oder einem Bearbeitungszentrum, befestigt zu werden und der Schneideinsatz bzw. die Schneideinsätze ist/sind derart an dem Grundkörper befestigt, dass sie bei der zerspanenden Bearbeitung mit dem zu bearbeitenden Werkstück in Eingriff gelangen. Die Schneideinsätze sind üblicherweise auswechselbar an dem Grundkörper befestigt, z.B. über Befestigungsschrauben, sodass bei einem Verschleiß der mit dem Werkstück in Eingriff gelangenden Schneiden lediglich die Schneideinsätze ausgewechselt zu werden brauchen.

Insbesondere für eine zerspanende Bearbeitung durch Fräsen sind Werkzeuge bekannt, bei denen mehrere Schneideinsätze in einer sich im Wesentlichen spiralförmig um die Rotationsachse des Grundkörpers erstreckenden Anordnung in entsprechenden Sitzen an dem Grundkörper angeordnet sind. Bei solchen oftmals auch als "Igelfräser" bezeichneten Werkzeugen kann sich z.B. eine Reihe von Schneideinsätzen spiralförmig um den Grundkörper erstrecken oder es können sich z.B. auch mehrere Reihen von Schneideinsätzen spiralförmig um den Grundkörper erstrecken. Zum Abführen der bei der zerspanenden Bearbeitung eines Werkstücks entstehenden Späne ist der Grundkörper eines solchen Werkzeugs üblicherweise mit einem oder mehreren Spanräumen versehen, die sich insbesondere zum Beispiel ebenfalls im Wesentlichen spiralförmig entlang des Grundkörpers erstrecken können. Insbesondere bei einer großen Anzahl von an dem Grundkörper angeordneten Schneideinsätzen gestaltet es sich zunehmend schwierig, gleichzeitig eine zuverlässige und exakte Positionierung der Schneideinsätze und eine gute Abfuhr der entstehenden Späne sicherzustellen.

Bei herkömmlichen derartigen Werkzeugen, bei denen der Sitz für den Schneideinsatz neben der Grundfläche für das Abstützen der Unterseite des Schneideinsatzes auch sowohl eine seitliche Anlagefläche für eine Positionierung des Schneideinsatzes bezüglich der radialen Richtung als auch eine seitliche Anlagefläche für eine Positionierung des Schneideinsatzes bezüglich der axialen Richtung aufweist, gestaltet es sich schwierig, eine gute Spanabfuhr und eine gewünschte relative Positionierung mehrerer Schneideinsätze zueinander in Einklang zu bringen. Dieses Problem ist besonders bei den Schneideinsätzen, die in der axialen Richtung von dem Grundkörper hervorstehen, verstärkt gegeben.

Die Richtungsangaben "axial", "radial" bzw. "tangential" werden im Rahmen der vorliegenden Beschreibung bezogen auf die Rotationsachse des Werkzeugs verwendet, sofern sich aus dem konkreten Kontext nicht ausdrücklich eine abweichende Bezugnahme ergibt.

US 5,542,793 beschreibt einen Werkzeuggrundkörper, bei dem ein Sitz für einen auswechselbaren Schneideinsatz so ausgebildet ist, dass sich der Schneideinsatz nur mit seiner Unterseite an einer Grundfläche des Sitzes und mit einer Seitenfläche an einer seitlichen Anlagefläche für eine radiale Positionierung abstützt. Die Positionierung des Schneideinsatzes in einer axialen Richtung des Grundkörpers erfolgt über das Zusammenwirken einer Befestigungsschraube mit einer entsprechenden Bohrung in dem Sitz, wobei die Dimensionierung der Befestigungsschraube und die Dimensionierung der Bohrung exakt aufeinander abgestimmt sind, um durch einen Formschluss eine genaue Ausrichtung in der axialen Richtung zu erzielen. Die erforderliche exakte Dimensionierung und Abstimmung der Befestigungsschraube und der Bohrung ist mit hohen Herstellungskosten verbunden, relativ anfällig gegenüber auftretendem Verschleiß und empfindlich gegenüber Fertigungstoleranzen des Schneideinsatzes.

GB 2 041 797 A1 beschreibt ein Werkzeug für die zerspanende Bearbeitung nach dem Oberbegriff von Anspruch 1. Ein konisch vergrößerter Zwischenabschnitt einer Schraube wird in einem länglichem Schlitz geführt, sodass ein Kopf der Schraube bei einem Einschrauben ausgelenkt wird und einen Schneideinsatz gegen eine Anlagefläche drückt.

Es ist Aufgabe der vorliegenden Erfindung, ein verbessertes Werkzeug zur zerspanenden Bearbeitung bereitzustellen.

Die Aufgabe wird durch ein Werkzeug zur zerspanenden Bearbeitung gemäß Anspruch 1 gelöst. Vorteilhafte Weiterbildungen sind in den abhängigen Ansprüchen angegeben.

Das Werkzeug kann insbesondere ein Fräswerkzeug mit einer Mehrzahl von an entsprechenden Sitzen befestigten Schneideinsätzen sein. Dabei können z.B. alle Schneideinsätze in der angegebenen Weise an den jeweiligen Sitzen befestigt sein oder es können z.B. auch nur solche Schneideinsätze, die in der axialen Richtung von dem Grundkörper hervorstehen, in der angegebenen Weise an ihren zugeordneten Sitzen befestigt sein. Da der gewindefreie Schaftabschnitt einen kleineren Querschnitt als der gewindefreie Bohrungsabschnitt aufweist, d.h. der gewindefreie Bohrungsabschnitt vollumfänglich um den gewindefreien Schaftabschnitt ein Übermaß aufweist, das wesentlich größer als die auftretenden Fertigungstoleranzen ist, ist bei dem Anziehen der Befestigungsschraube zum Befestigen des Schneideinsatzes an dem Sitz eine freie Beweglichkeit des gewindefreien Schaftabschnittes sowohl in der axialen als auch in der radialen Richtung ermöglicht. Dieses Übermaß ermöglicht eine kostengünstige Herstellung des Sitzes und der darin ausgebildeten Bohrung, da relativ große Fertigungstoleranzen ermöglicht sind. Da die Befestigungsschraube bei der Befestigung des Schneideinsatzes an dem Sitz derart elastisch ausgelenkt wird, dass der gewindefreie Schaftabschnitt an einer von der seitlichen Anlagefläche abgewandten Seite an dem gewindefreien Bohrungsabschnitt anliegt, wird über die Position und Form dieser Seite des gewindefreien Bohrungsabschnitts die Position des Schneideinsatzes in der Richtung parallel zu der seitlichen Anlagefläche festgelegt. Bei dem elastischen Auslenken der Befestigungsschraube erfolgt in dieser Weise eine Ausrichtung des Schneideinsatzes an dem Sitz. Wenn sich die seitliche Anlagefläche z.B. als radiale Anlagefläche im Wesentlichen parallel zur Rotationsachse erstreckt, wird durch das Zusammenwirken des gewindefreien Schaftabschnitts mit dem gewindefreien Bohrungsabschnitt somit die axiale Position des Schneideinsatzes festgelegt. Falls sich andererseits - bei einer anderen Realisierung - die seitliche Anlagefläche z.B. als axiale Anlagefläche im Wesentlichen senkrecht zur Rotationsachse erstreckt, wird durch das Zusammenwirken die radiale Position des Schneideinsatzes festgelegt. Die seitliche Anlagefläche kann somit verschiedene Ausrichtungen relativ zu der Rotationsachse aufweisen. Die erfindungsgemäße Ausgestaltung der Befestigung des Schneideinsatzes ist sehr kostengünstig in der Fertigung, relativ unempfindlich bezüglich Fertigungstoleranzen und Verschleißeffekten und ermöglicht trotzdem eine zuverlässige Positionierung des Schneideinsatzes, bezüglich zwei Raumrichtungen über die Grundfläche und die seitliche Anlagefläche und bezüglich der dritten Raumrichtung über das Zusammenwirken des Kopfabschnittes der Befestigungsschraube mit der Durchgangsbohrung des Schneideinsatzes bzw. des gewindefreien Schaftabschnittes mit dem gewindefreien Bohrungsabschnitt.

Gemäß einer Weiterbildung ist der Schneideinsatz in einer Richtung, die sich senkrecht zu einer Flächennormalen der seitlichen Anlagefläche und senkrecht zu einer Flächennormalen der Grundfläche erstreckt, durch das Zusammenwirken des Kopfabschnittes der Befestigungsschraube mit dem Durchgangsloch des Schneideinsatzes ausgerichtet. Mit anderen Worten ist der Schneideinsatz in der dritten Raumrichtung nicht über eine Anlage an einer weiteren seitlichen Anlagefläche fixiert, sondern - aufgrund der Ausgestaltung des gewindefreien Schaftabschnittes und des gewindefreien Bohrungsabschnittes - nur über das Zusammenwirken des Kopfabschnittes mit dem Durchgangsloch. Da somit bezüglich der dritten Raumrichtung keine Anlagefläche erforderlich ist, gibt es einen großen Gestaltungsspielraum für die Anordnung von mehreren Schneideinsätzen an dem Grundkörper und es kann ausreichend Raum für eine zuverlässige Spanabfuhr bereitgestellt werden.

Gemäß einer Weiterbildung weist der gewindefreie Bohrungsabschnitt auf der von der seitlichen Anlagefläche abgewandten Seite eine konkav gekrümmte Form auf. In diesem Fall bewegt sich der gewindefreie Schaftabschnitt der Befestigungsschraube bei dem Befestigen des Schneideinsatzes an dem Sitz zuverlässig in den am Weitesten von der seitlichen Anlagefläche entfernten Bereich des gewindefreien Bohrungsabschnittes. Somit wird der Schneideinsatz beim Befestigen zuverlässig ausgerichtet. Bei der Form des gewindefreien Bohrungsabschnittes besteht dabei eine relativ große Gestaltungsfreiheit. Insbesondere ist die Form des gewindefreien Bohrungsabschnittes auf der der seitlichen Anlagefläche zugewandten Seite relativ unerheblich. Der gewindefreie Bohrungsabschnitt kann z.B. einen kreisförmigen Querschnitt mit einem Durchmesser, der erheblich größer als der Durchmesser des gewindefreien Schaftabschnittes ist, aufweisen, die Form eines Langlochs haben oder aber auch andere Ausgestaltungen aufweisen.

Der gewindefreie Bohrungsabschnitt ist in einer Richtung parallel zu der Anlagefläche und senkrecht zu einer Längsachse der Befestigungsschraube breiter als der Durchmesser des gewindefreien Schaftabschnitts der Befestigungsschraube. Somit ist ausreichend seitliches Spiel, das die auftretenden Herstellungstoleranzen deutlich übersteigt, des gewindefreien Schaftabschnitts in dem gewindefreien Bohrungsabschnitt gegeben, sodass einerseits eine kostengünstige Herstellung ermöglicht ist und sich der gewindefreie Schaftabschnitt anderseits zur Ausrichtung des Schneideinsatzes zuverlässig in dem gewindefreien Bohrungsabschnitt bewegen kann.

Gemäß einer Weiterbildung ist eine Flächennormale der seitlichen Anlagefläche überwiegend senkrecht zu der Rotationsachse ausgerichtet. In diesem Fall ist die seitliche Anlagefläche als eine radiale Anlagefläche, d.h. zum Abstützen gegen radial einwärts wirkende Kräfte, ausgebildet. Diese Ausgestaltung ermöglicht insbesondere bei einem Werkzeug mit einer Vielzahl von spiralförmig angeordneten Schneideinsätzen eine gute Spanraumgestaltung.

Gemäß einer Weiterbildung weist der gewindefreie Bohrungsabschnitt einen im Wesentlichen kreisförmigen Querschnitt auf. Diese Ausgestaltung ermöglicht eine besonders kostengünstige Fertigung des gewindefreien Bohrungsabschnittes durch Bohren. Der kreisförmige Querschnitt weist in diesem Fall ein deutliches Übermaß gegenüber dem Querschnitt des gewindefreien Schaftabschnittes der Befestigungsschraube auf.

Gemäß einer Weiterbildung ist der gewindefreie Bohrungsabschnitt parallel zu der Gewindebohrung ausgebildet. Grundsätzlich kann der gewindefreie Bohrungsabschnitt auch eine andere Ausrichtung aufweisen, die parallele Ausbildung ermöglicht jedoch eine besonders kostengünstige Fertigung. Bevorzugt kann der gewindefreie Bohrungsabschnitt koaxial zu der Gewindebohrung ausgebildet sein.

Da der Sitz frei von einer weiteren Anlagefläche ist, beanspruchen die Komponenten bzw. Elemente zur Positionierung des Schneideinsatzes besonders wenig Raum.

Gemäß einer Weiterbildung verjüngt sich der sich an dem Durchgangsloch des Schneideinsatzes abstützende Bereich des Kopfabschnitts der Befestigungsschraube in Richtung des Gewindeabschnitts. In diesem Fall ist eine besonders zuverlässige Positionierung des Schneideinsatzes ermöglicht.

Gemäß einer Weiterbildung ist eine Längsachse der Gewindebohrung in der Ebene des Kontakts zwischen dem Kopfabschnitt der Befestigungsschraube und dem Durchgangsloch des Schneideinsatzes gegenüber der Längsachse des Durchgangsloches in Richtung zu der seitlichen Anlagefläche versetzt. In diesem Fall wird der Schneideinsatz einerseits zuverlässig gegen die seitliche Anlagefläche gespannt und andererseits auch die elastische Auslenkung der Befestigungsschraube (insbesondere auch des gewindefreien Schaftabschnittes) von der seitlichen Anlagefläche weg ermöglicht. In dem Sonderfall, dass sich die Längsachse der Gewindebohrung parallel zu der Längsachse des Durchgangsloches erstreckt, ist die Längsachse der Gewindebohrung überall zu der Längsachse des Durchgangsloches versetzt. Für den Fall, dass sich die Längsachse der Gewindebohrung aber nicht parallel zu der Längsachse des Durchgangsloches erstreckt, kommt es darauf an, dass der Versatz zumindest in der Ebene gegeben ist, in der der Kopfabschnitt der Befestigungsschraube das Durchgangsloch kontaktiert.

Gemäß einer Weiterbildung ist der Sitz derart ausgebildet, dass der darin befestigte Schneideinsatz in axialer Richtung von dem Grundkörper hervorsteht. Bei in axialer Richtung von dem Grundkörper hervorstehend angeordneten Schneideinsätzen ist die Schwierigkeit einer guten Spanableitung sehr ausgeprägt, insbesondere im Fall von Fräsern mit einer Mehrzahl von spiralförmig um die Rotationsachse angeordneten Schneideinsätzen.

Gemäß einer Weiterbildung weist das Werkzeug eine Mehrzahl von spiralförmig entlang der Rotationsachse angeordneten Sitzen für Schneideinsätze auf. Bevorzugt kann das Werkzeug eine Mehrzahl von spiralförmig umlaufenden Reihen von Sitzen für Schneideinsätze aufweisen.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine perspektivische Darstellung eines Werkzeugs für die zerspanende Bearbeitung gemäß einer Ausführungsform, bei dem die Sitze für Schneideinsätze nur teilweise mit Schneideinsätzen bestückt sind;
- Fig. 2:: eine vergrößerte Darstellung eines Details von Fig. 1;
- Fig. 3:: eine vergrößerte Darstellung eines Sitzes zur Aufnahme eines auswechselbaren Schneideinsatzes;
- Fig. 4:: eine Seitenansicht einer Befestigungsschraube;
- Fig. 5:: eine schematische Schnittdarstellung eines Sitzes mit einem daran angeordneten Schneideinsatz ohne Befestigungsschraube;
- Fig. 6:: eine schematische Schnittdarstellung eines Sitzes mit einem daran angeordneten Schneideinsatz und mit Befestigungsschraube in einem ersten Zustand, in dem die Befestigungsschraube nicht angezogen ist;
- Fig. 7:: eine schematische Schnittdarstellung des Sitzes mit dem daran angeordneten Schneideinsatz und mit der Befestigungsschraube in einem zweiten Zustand, in dem die Befestigungsschraube angezogen ist;
- Fig. 8 a):: eine schematische Darstellung der Ausrichtung zwischen einem gewindefreien Schaftabschnitt der Befestigungsschraube und einem gewindefreien Bohrungsabschnitt des Sitzes bei der Ausführungsform in dem ersten Zustand;

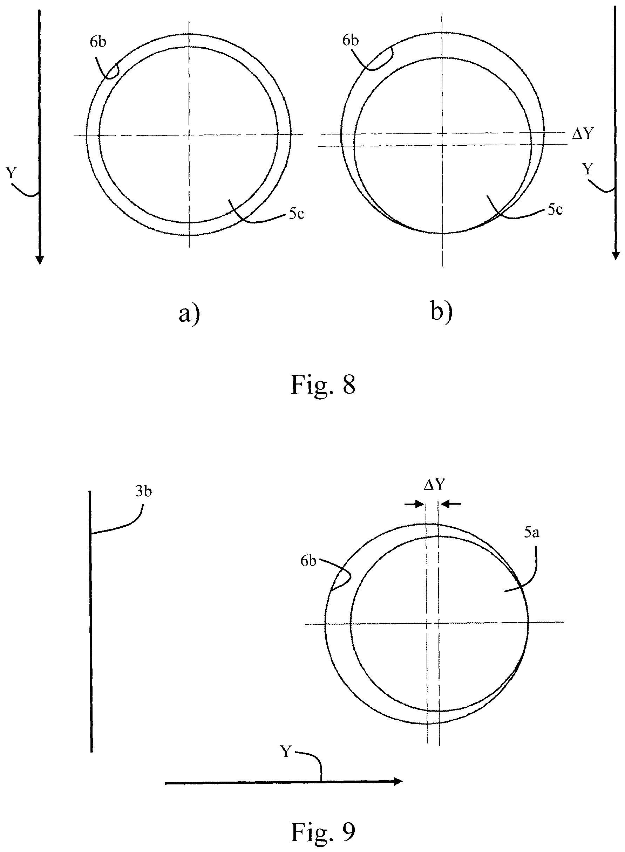

- Fig. 8 b):: eine schematische Darstellung der Ausrichtung zwischen dem gewindefreien Schaftabschnitt der Befestigungsschraube und dem gewindefreien Bohrungsabschnitt des Sitzes in dem zweiten Zustand;
- Fig. 9: eine schematische Darstellung zur Erläuterung der genauen Ausrichtung eines gewindefreien Schaftabschnittes in einem gewindefreien Bohrungsabschnitt in dem zweiten Zustand bei der Ausführungsform;

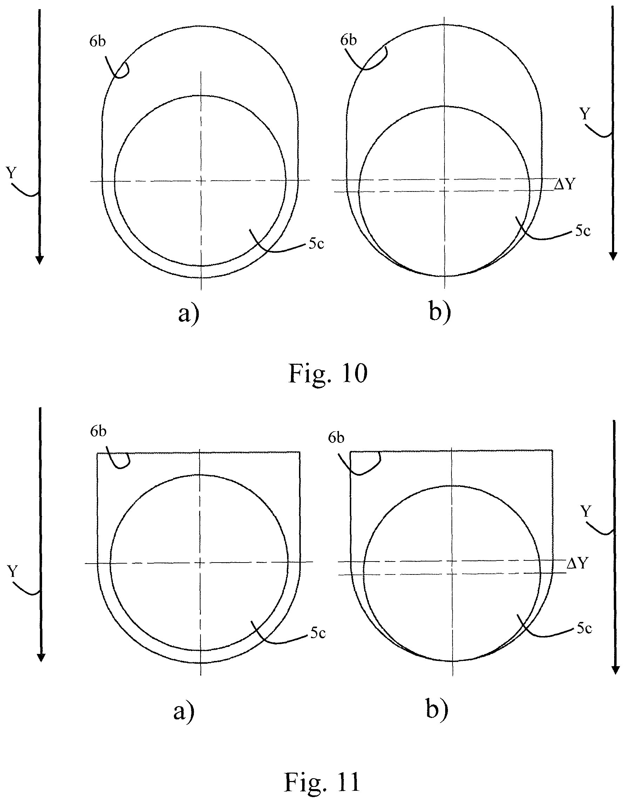

- Fig. 10 a):: eine schematische Darstellung entsprechend Fig. 8 a) bei einer ersten Abwandlung, bei der der gewindefreie Bohrungsabschnitt eine andere Querschnittsform aufweist;
- Fig. 10 b):: eine schematische Darstellung entsprechend Fig. 8 b) bei der ersten Abwandlung;
- Fig. 11 a):: eine schematische Darstellung entsprechend Fig. 8 a) bei einer zweiten Abwandlung, bei der gewindefreie Bohrungsabschnitt noch eine andere Querschnittsform aufweist;
- Fig. 11 b):: eine schematische Darstellung entsprechend Fig. 8 b) bei der zweiten Abwandlung;

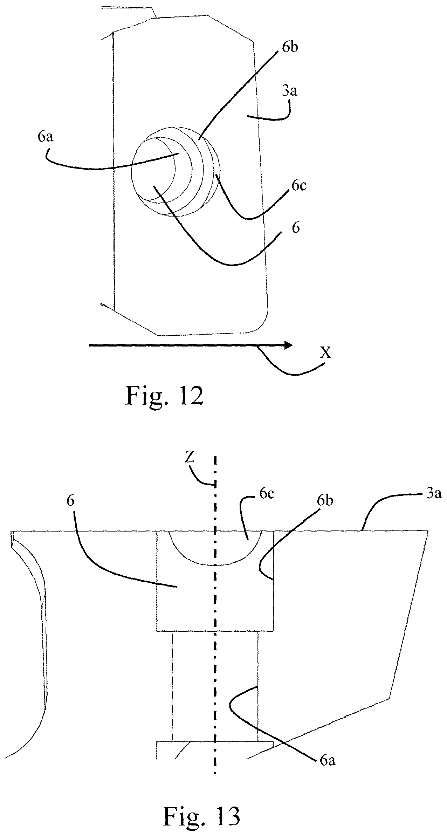

- Fig. 12:: eine schematische Darstellung des Sitzes 3 bei einer Weiterbildung der Ausführungsform; und
- Fig. 13:: eine schematische Schnittdarstellung der Weiterbildung von Fig. 12.

### AUSFÜHRUNGSFORM

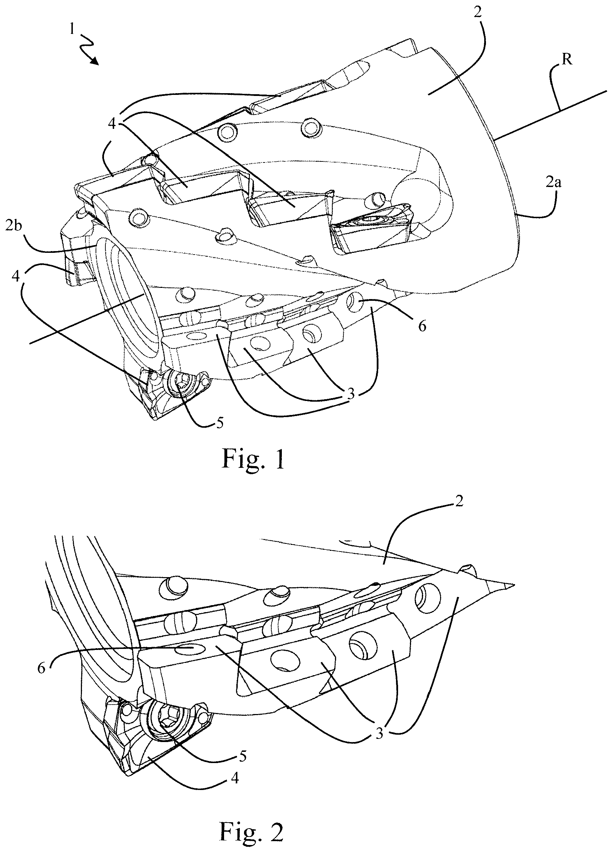

Eine Ausführungsform wird im Folgenden unter Bezugnahme auf die Fig. 1 bis Fig. 9 eingehender beschrieben.

In Fig. 1 ist ein Werkzeug 1 für die zerspanende Bearbeitung gemäß der Ausführungsform in einer perspektivischen Darstellung gezeigt. Das Werkzeug 1 ist bei der Ausführungsform als ein Fräswerkzeug ausgebildet. Es ist jedoch zu beachten, dass die erfindungsgemäße Lösung auch bei anderen Werkzeugen, insbesondere Bohr- oder Drehwerkzeugen, zum Einsatz kommen kann.

Das Werkzeug 1 gemäß der Ausführungsform weist einen Grundkörper 2 mit einer Mehrzahl von spiralförmig um eine Rotationsachse R des Grundkörpers 2 angeordneten Sitzen 3 zur Aufnahme von auswechselbaren Schneideinsätzen 4 auf. Der Grundkörper 2 ist dazu ausgebildet, mit einem ersten Ende 2a mit einer Werkzeugmaschine, insbesondere einer Fräsmaschine, verbunden zu werden und im Betrieb um die Rotationsachse R zu rotieren. Das von dem ersten Ende 2a abgewandte zweite Ende 2b bildet ein freies Ende, das im Betrieb dem zu bearbeitenden Werkstück zugewandt ist.

Bei dem speziell in den Figuren dargestellten Ausführungsbeispiel ist das Werkzeug 1 als ein sogenannter Igelfräser ausgebildet, bei dem mehrere Reihen von Sitzen 3 zur Aufnahme von Schneideinsätzen 4 spiralförmig um die Rotationsachse umlaufend vorgesehen sind. Es ist jedoch zu beachten, dass diese Ausgestaltung nicht zwingend ist, und die beschriebene Lösung auch bei anderen Werkzeugen zum Einsatz kommen kann.

Der Grundkörper 2 ist aus einem relativ zähen Material gefertigt und kann z.B. insbesondere aus Werkzeugstahl ausgebildet sein. Die Schneideinsätze 4 sind aus einem Wesentlich härteren Material gebildet und dazu ausgebildet, bei der zerspanenden Bearbeitung mit dem zu bearbeitenden Werkstück in Eingriff zu gelangen. Die Schneideinsätze können dabei insbesondere in an sich bekannter Weise aus Hartmetall, Cermet oder einer Schneidkeramik gebildet sein. Die Schneideinsätze 4 sind über Befestigungsschrauben 5 an den jeweiligen Sitzen 3 befestigt, wie im Folgenden noch eingehender beschrieben wird.

Bei dem im Folgenden eingehender beschriebenen Ausführungsbeispiel sind sämtliche Schneideinsätze 4 im Wesentlichen in der gleichen Weise an den zugehörigen Sitzen 3 angeordnet, sodass im Folgenden die Art der Befestigung lediglich für einen der Sitze 3 im Detail beschrieben wird. Obwohl bei dem konkreten Ausführungsbeispiel die Befestigung für alle Schneideinsätze 4 im Wesentlichen in der gleichen Weise erfolgt, ist es z.B. grundsätzlich auch möglich, einen Teil der Schneideinsätze in anderer Weise zu befestigen. Dabei ist die Art der Befestigung, wie sie im Folgenden beschrieben wird, jedoch insbesondere auch für eine Befestigung der Schneideinsätze 4 besonders vorteilhaft, die in axialer Richtung mit einer Schneidkante von dem freien Ende 2b des Grundkörpers 2 hervorstehen. Unter der axialen Richtung ist dabei die Richtung zu verstehen, die parallel zu der Rotationsachse R verläuft.

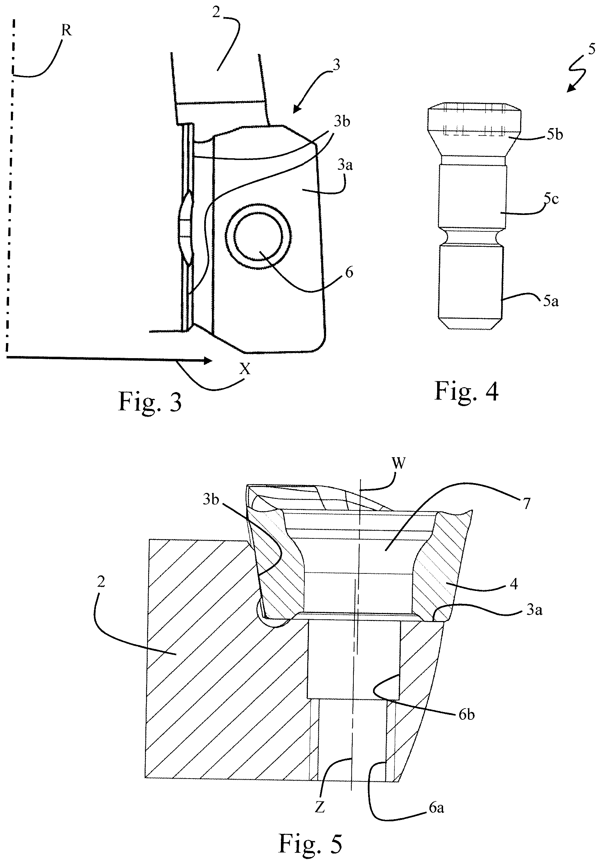

Die Ausgestaltung der Sitze 3 wird im Folgenden unter Bezugnahme auf Fig. 3 am Beispiel eines Sitzes 3, der sich an dem freien Ende 2b des Grundkörpers 2 befindet, eingehender beschrieben.

Wie in Fig. 3 zu erkennen ist, weist der Sitz 3 eine Grundfläche 3a auf, die dazu ausgebildet ist, eine Unterseite des Schneideinsatzes 4 abzustützen. Bei dem konkret in den Figuren dargestellten Ausführungsbeispiel erstreckt sich die Grundfläche 3a dabei annähernd senkrecht zu einer tangentialen Richtung, sodass die bei der Zerspanung auftretenden Schnittkräfte vorwiegend in die Grundfläche 3a eingeleitet werden. In der Grundfläche 3a ist eine Bohrung 6 zur Aufnahme eines unteren Teils der Befestigungsschraube 5 ausgebildet, die im Folgenden noch näher beschrieben wird.

Wie ebenfalls in Fig. 3 zu sehen ist, weist der Sitz 3 ferner eine seitliche Anlagefläche 3b auf, die sich quer zu der Grundfläche 3 erstreckt und als Anlage für eine Seitenfläche des Schneideinsatzes 4 ausgebildet ist. Die seitliche Anlagefläche 3b kann sich z.B. im Wesentlichen senkrecht zu der Grundfläche 3a erstrecken, es ist jedoch auch eine Anordnung unter einem anderen Winkel möglich. Wie in Fig. 3 zu erkennen ist, ist die seitliche Anlagefläche 3b bei dem Ausführungsbeispiel durch eine Unterbrechung in zwei Teilflächen unterteilt, es ist jedoch auch eine zusammenhängende Ausgestaltung der seitlichen Anlagefläche 3b möglich.

Der Sitz 3 ist dazu ausgebildet, den Schneideinsatz 4 derart aufzunehmen, dass sich der Schneideinsatz 4 nur mit der Unterseite und einer seiner Seitenflächen an dem Sitz 3 abstützt. Der Sitz 3 ist daher frei von einer weiteren seitlichen Anlagefläche zur Abstützung einer weiteren Seitenfläche des Schneideinsatzes 4. Aufgrund dieser Ausgestaltung wird der Schneideinsatz 4 an dem Sitz 3 über die Grundfläche 3a und die seitliche Anlagefläche 3b bezüglich zwei Raumrichtungen ausgerichtet und festgelegt. Die Ausrichtung und Festlegung bezüglich der dritten verbleibenden Raumrichtung erfolgt über das Zusammenwirken der Befestigungsschraube 5 mit einem Durchgangsloch 7 in dem Schneideinsatz 4 und der in der Grundfläche 3a ausgebildeten Bohrung 6, wie noch näher erläutert wird.

Bei dem dargestellten Ausführungsbeispiel ist die seitliche Anlagefläche 3b als eine radiale Anlagefläche zum Abstützen des Schneideinsatzes 4 gegenüber in radialer Richtung X wirkenden Kräften ausgebildet und erstreckt sich somit überwiegend senkrecht zu der radialen Richtung X. Eine solche Ausrichtung ist bei dem konkret dargestellten Fräswerkzeug vorteilhaft. Es ist jedoch zu beachten, dass die seitliche Anlagefläche 3b auch eine andere Ausrichtung aufweisen kann, z.B. insbesondere auch zur Abstützung des Schneideinsatzes gegenüber in axialer Richtung wirkenden Kräften ausgebildet sein kann, sodass sie sich z.B. im Wesentlichen senkrecht zu der axialen Richtung erstrecken kann. Es sind neben diesen sehr speziellen Ausrichtungen jedoch auch andere Ausrichtungen der seitlichen Anlagefläche 3b möglich.

Im Folgenden wird die Befestigungsschraube 5 unter Bezugnahme auf Fig. 4 eingehender beschrieben.

Die Befestigungsschraube 5 weist einen Gewindeabschnitt 5a, einen Kopfabschnitt 5b und einen zwischen dem Gewindeabschnitt 5a und dem Kopfabschnitt 5b angeordneten gewindefreien Schaftabschnitt 5c auf. Der Kopfabschnitt 5b ist an seinem freien Ende mit einer Struktur zum Zusammenwirken mit einem Schraubwerkzeug versehen, um ein Betätigen der Befestigungsschraube 5 zu ermöglichen. Obwohl in Fig. 4 schematisch eine sechseckige Ausnehmung als solche Struktur dargestellt ist, sind auch andere im Stand der Technik zu findende Ausgestaltungen möglich. Der Gewindeabschnitt 5a ist dazu ausgebildet mit einem korrespondierenden, als Gewindebohrung 6a ausgebildeten Bereich der Bohrung 6 des Sitzes 3 zusammenzuwirken. Der Kopfabschnitt 5b weist an seiner dem Gewindeabschnitt 5a zugewandten Seite eine sich in Richtung des Gewindeabschnittes 5a verjüngende Form auf, die dazu ausgebildet ist, mit dem Durchgangsloch 7 in dem Schneideinsatz 4 zusammenzuwirken. Es ist z.B. eine konische Ausgestaltung möglich.

Der gewindefreie Schaftabschnitt 5c weist eine im Wesentlichen kreiszylinderförmige Ausgestaltung auf, wie in Fig. 4 zu sehen ist. Obwohl der gewindefreie Schaftabschnitt 5c bei der Ausführungsform einen Querschnitt aufweist, der etwas größer als der Querschnitt des Gewindeabschnittes 5a ist, kann der gewindefreie Schaftabschnitt 5c z.B. auch einen kleineren Durchmesser aufweisen. Bei der dargestellten Ausführungsform ist zwischen dem Gewindeabschnitt 5a und dem gewindefreien Schaftabschnitt 5c eine umlaufende Rille ausgebildet, die eine elastische Auslenkbarkeit der Befestigungsschraube 5 in einer Richtung senkrecht zu ihrer Längsachse verstärkt. Es ist jedoch zu beachten, dass eine solche Rille nicht zwingend erforderlich ist.

Als nächstes wird die Ausgestaltung der in der Grundfläche 3a des Sitzes 3 ausgebildeten Bohrung 6 detaillierter beschrieben.

Wie insbesondere in Fig. 5 zu erkennen ist, weist die Bohrung 6 in einem von der Grundfläche 3a des Sitzes 3 entfernten Bereich eine Gewindebohrung 6a auf, die an den Gewindeabschnitt 5a der Befestigungsschraube 5 angepasst ist. Näher in Richtung der Grundfläche 3a des Sitzes 3 weist die Bohrung 6 einen gewindefreien Bohrungsabschnitt 6b auf, der in der Richtung senkrecht zu der Bohrungsachse einen größeren Querschnitt als die Gewindebohrung 6a hat. Bei der dargestellten Ausführungsform geht die Gewindebohrung 6a über eine Stufe in den gewindefreien Bohrungsabschnitt 6b über. Obwohl in Bezug auf die Ausführungsform eine Bohrung 6 gezeigt ist, die sich ausgehend von der Grundfläche 3a durch das Material des Grundkörpers 2 erstreckt und rückseitig ebenfalls offen ausgeführt ist, was eine besonders einfache Fertigung ermöglicht, kann die Bohrung 6 an dem von der Grundfläche 3a abgewandten Ende auch geschlossen ausgebildet sein.

Bei der Ausführungsform erstreckt sich die Bohrung 6 über ihre gesamte Tiefe im Wesentlichen senkrecht zu der Grundfläche 3a des Sitzes 3. Es ist in einer Abwandlung aber auch möglich, die Bohrung 6 schräg zu der Grundfläche 3a verlaufend auszubilden. Ferner ist es z.B. auch möglich, dass eine Längsachse der Gewindebohrung 6a und eine Längsachse des gewindefreien Bohrungsabschnittes 6b zueinander versetzt ausgebildet sind und/oder unter einem Winkel zueinander verlaufen. Eine parallele und insbesondere koaxiale Ausbildung der Gewindebohrung 6a und des gewindefreien Bohrungsabschnittes 6b ermöglicht aber eine besonders kostengünstige Herstellung.

Der gewindefreie Bohrungsabschnitt 6b weist in der Richtung senkrecht zu der Längsachse der Gewindebohrung 6a einen Querschnitt auf, der deutlich größer ist als der Querschnitt des gewindefreien Schaftabschnittes 5c der Befestigungsschraube, sodass der gewindefreien Schaftabschnitt 5c mit vollumfänglichem, allseitigem Spiel in dem gewindefreien Bohrungsabschnitt 6b aufnehmbar ist. Bei dem Ausführungsbeispiel weist der gewindefreie Bohrungsabschnitt 6b z.B. eine runde Querschnittsform auf die gegenüber dem gewindefreien Schaftabschnitt 5c mit einem deutlichen Übermaß versehen ist, das die Größe üblicher Toleranzen signifikant übersteigt. In dieser Weise ist sichergestellt, dass sich der gewindefreie Schaftabschnitt 5c bei einer elastischen Deformation der Befestigungsschraube 5 in den Richtungen senkrecht zu der Längsachse der Befestigungsschraube 5 in dem gewindefreien Bohrungsabschnitt 6b bewegen kann. Für den Spezialfall einer koaxialen Ausbildung der Gewindebohrung 6a und des gewindefreien Bohrungsabschnitts 6b sowie eines kreisförmigen Querschnitts des gewindefreien Bohrungsabschnittes 6b ist dies in Fig. 8 a) dargestellt. Es ist ersichtlich, dass der gewindefreie Schaftabschnitt 5c über seinen gesamten Umfang in dem gewindefreien Bohrungsabschnitt 6b Spiel aufweist. Der gewindefreie Bohrungsabschnitt 6b weist (auch) auf seiner von der seitlichen Anlagefläche 3b abgewandten Seite eine konkave Form auf, deren Radius größer als der Radius des gewindefreien Schaftabschnittes 5c ist.

Wie in Fig. 5 zu sehen ist, ist die Längsachse Z der Gewindebohrung 6a gegenüber der Längsachse W des Durchgangsloches 7 in dem Schneideinsatz 4 leicht in Richtung zu der seitlichen Anlagefläche 3b versetzt angeordnet, wenn sich der Schneideinsatz 4 in dem Sitz 3 befindet. Bei dem dargestellten Sonderfall einer parallelen Ausrichtung der Längsachse Z der Gewindebohrung 6a und der Längsachse W des Durchgangsloches 7 ist dieser Versatz über die gesamte Erstreckung der Längsachsen Z, W gegeben. Es ist jedoch auch möglich, dass die jeweiligen Längsachsen Z und W einen Winkel miteinander einschließen. In diesem Fall wird die entsprechende Wirkung erzielt, wenn der beschriebene Versatz der Längsachse Z der Gewindebohrung 6a in einer Höhenposition gegeben ist, an der der Kopfabschnitt 5b der Befestigungsschraube 5 das Durchgangsloch 7 des Schneideinsatzes 4 kontaktiert.

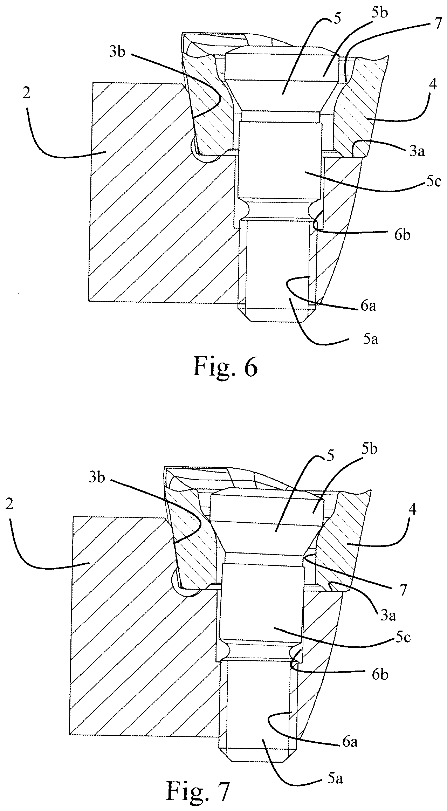

Unter Bezugnahme auf die Fig. 6 und Fig. 7 wird nun beschrieben, wie der Schneideinsatz 4 mit der Befestigungsschraube 5 an dem Sitz 3 befestigt wird. In Fig. 6 ist ein erster Zustand dargestellt, in dem die Befestigungsschraube 5 noch nicht angezogen ist. Es ist zu erkennen, dass der Gewindeabschnitt 5a der Befestigungsschraube 5 in der Gewindebohrung 6a aufgenommen ist und der gewindefreie Schaftabschnitt 5c der Befestigungsschraube 5 auf allen Seiten einen Freiraum zu der Wand des gewindefreien Bohrungsabschnitts 6b aufweist. Dieser erste Zustand ist auch in Fig. 8 a) schematisch dargestellt.

Bei dem Anziehen der Befestigungsschraube 5 legt sich die Unterseite des Kopfabschnittes 5b an der Oberfläche des Durchgangsloches 7 in dem Schneideinsatz 4 an. Aufgrund des Versatzes der Längsachse Z der Gewindebohrung 6a zu der Längsachse W des Durchgangsloches 7 berührt der Kopfabschnitt 5b die Oberfläche des Durchgangsloches 7 zuerst auf der Seite, die der seitlichen Anlagefläche 3b zugewandt ist, sodass der obere Bereich der Befestigungsschraube 5 elastisch ausgelenkt wird. Dabei werden der Kopfabschnitt 5b und der gewindefreie Schaftabschnitt 5c in der Richtung von der seitlichen Anlagefläche 3b weg ausgelenkt und der Schneideinsatz 4 wird mit einer Seitenfläche gegen die seitliche Anlagefläche 3b gedrückt. Bei dem Anziehen der Befestigungsschraube 5 wird der Schneideinsatz 4 folglich mit seiner Unterseite gegen die Grundfläche 3a und mit einer Seitenfläche gegen die seitliche Anlagefläche 3b gespannt, sodass der Schneideinsatz 4 in dieser Weise bezüglich zwei Raumrichtungen festgelegt wird.

Bei dem elastischen Auslenken der Befestigungsschraube 5 bewegt sich auch der gewindefreie Schaftabschnitt 5c in der Richtung Y weg von der seitlichen Anlagefläche 3b, wie in den Fig. 8 b) und Fig. 9 schematisch dargestellt ist. Da der gewindefreie Bohrungsabschnitt 6b ein Übermaß gegenüber dem gewindefreien Schaftabschnitt 5c aufweist, kann sich der gewindefreie Schaftabschnitt 5c über eine Strecke ΔY in dem gewindefreien Bohrungsabschnitt 6b bewegen. Aufgrund des Übermaßes des gewindefreien Bohrungsabschnittes 6b in der Richtung senkrecht zu der Richtung Y und der konkav gekrümmten Form des gewindefreien Bohrungsabschnittes 6b auf der von der seitlichen Anlagefläche 3b abgewandten Seite, bewegt sich der gewindefreie Schaftabschnitt 5c - geführt durch die Wand des gewindefreien Bohrungsabschnittes 6b - solange, bis er in dem am weitesten von der seitlichen Anlagefläche 3b entfernten Bereich des gewindefreien Bohrungsabschnittes 6b positioniert ist. Durch die konkav gekrümmte Form des gewindefreien Bohrungsabschnittes 6b wird der Schneideinsatz 4 dabei gleichzeitig in der dritten Raumrichtung (d.h. der Raumrichtung senkrecht zur Flächennormalen auf die seitliche Anlagefläche 3a und senkrecht zur Flächennormalen auf die Grundfläche 3b) ausgerichtet und geklemmt.

In dem in Fig. 8 b) und Fig. 9 dargestellten zweiten Zustand, in dem die Befestigungsschraube 5 angezogen ist, liegt der gewindefreie Schaftabschnitt 5c an der von der seitlichen Anlagefläche 3b abgewandten Seite an dem gewindefreien Bohrungsabschnitt 6b an. An der der seitlichen Anlagefläche 3b zugewandten Seite ist der gewindefreie Schaftabschnitt 5c von der Wand des gewindefreien Bohrungsabschnittes 6b beabstandet. Bei der Konstruktion des gewindefreien Bohrungsabschnittes 6b und des seitlichen Versatzes zwischen der Längsachse Z der Gewindebohrung 6a und der Längsachse W des Durchgangsloches 7 ist darauf zu achten, dass sich die Befestigungsschraube 5 ausreichend weit elastisch verformen kann, um in dem angezogenen zweiten Zustand mit dem gewindefreien Schaftabschnitt 5c auf der von der seitlichen Anlagefläche 3b abgewandten Seite an dem gewindefreien Bohrungsabschnitt 6b anzuliegen.

Obwohl in Bezug auf die Ausführungsform eine Ausgestaltung beschrieben wurde, bei der der gewindefreie Bohrungsabschnitt 6b eine zylindrische Form mit einem im Wesentlichen kreisförmigen Querschnitt aufweist, was insbesondere eine einfache und kostengünstige Herstellung ermöglicht, ist die Form des gewindefreien Bohrungsabschnittes 6b nicht darauf beschränkt, wie im Folgenden beispielhaft anhand von einer Weiterbildung und zwei Abwandlungen beschrieben wird.

### WEITERBILDUNG

Eine Weiterbildung der Ausführungsform wird nun unter Bezugnahme auf die Fig. 12 und Fig. 13 beschrieben.

Die Weiterbildung unterscheidet sich dadurch von der bisher beschriebenen Ausführungsform, dass der gewindefreie Bohrungsabschnitt 6b auf der von der seitlichen Anlagefläche 3b abgewandten Seite, an der der gewindefreie Schaftabschnitt 5c der Befestigungsschraube 5 in dem angezogenen zweiten Zustand an dem gewindefreien Bohrungsabschnitt 6b anliegt, zusätzlich speziell an die Form des gewindefreien Schaftabschnittes 5c angepasst ist.

Gemäß der Weiterbildung weist der gewindefreie Bohrungsabschnitt 6b auf der von der seitlichen Anlagefläche 3b abgewandten Seite eine Kontaktfläche 6c auf, an der sich der gewindefreie Schaftabschnitt 5c im elastisch ausgelenkten Zustand abstützt. Die Kontaktfläche 6c ist in der Wandung des gewindefreien Bohrungsabschnittes 6b als eine zylindrische Fläche ausgebildet, deren Radius im Wesentlichen dem Radius des gewindefreien Schaftabschnittes 5c entspricht. Die Zylinderachse der Kontaktfläche 6c ist gegenüber der Längsachse Z der Gewindebohrung 6a etwas verkippt ausgebildet. Bei dem in Fig. 12 und Fig. 13 konkret dargestellten Beispiel ist die Zylinderachse der Kontaktfläche 6c in etwa unter einem Winkel verkippt, unter dem der gewindefreie Schaftabschnitt 5c in dem elastisch ausgelenkten Zustand gegenüber dem Gewindeabschnitt 5a verkippt ist. Die Ausrichtung und der Radius der Kontaktfläche 6c sind somit an den Radius und die Ausrichtung des gewindefreien Schaftabschnittes 5c in dem elastisch ausgelenkten Zustand angepasst.

In der in Fig. 13 dargestellten Blickrichtung senkrecht zu der Längsachse Z der Gewindebohrung 6a ist die Schnittlinie zu erkennen, die sich als Schnittlinie zwischen der verkippten zylindrischen Kontaktfläche 6c und der zylindrischen Fläche mit größerem Durchmesser des Restes des gewindefreien Bohrungsabschnittes 6b ergibt.

Die beschriebene Weiterbildung ermöglicht eine noch genauere Positionierung des Schneideinsatzes 4.

### ABWANDLUNGEN

Eine erste Abwandlung der Ausführungsform wird im Folgenden anhand der Fig. 10 a) und 10 b) beschrieben.

Die erste Abwandlung unterscheidet sich darin von der zuvor beschriebenen Ausführungsform, dass der gewindefreie Bohrungsabschnitt 6b nicht als eine Bohrung mit einem kreisförmigen Querschnitt ausgebildet ist, sondern stattdessen in Form eines Langlochs.

Auch bei dieser Abwandlung weist der gewindefreie Bohrungsabschnitt 6b vollumfänglich um den gewindefreien Schaftabschnitt 5c ein derartiges Übermaß auf, dass sich der gewindefreie Schaftabschnitt 5c in den Richtungen senkrecht zu der Längsachse der Befestigungsschraube 5 in dem gewindefreien Bohrungsabschnitt 6b bewegen kann, wie in Fig. 10 a) für den ersten Zustand zu erkennen ist, in dem die Befestigungsschraube 5 noch nicht angezogen ist. Ferner weist der gewindefreie Bohrungsabschnitt 6b auch bei der Abwandlung auf seiner von der seitlichen Anlagefläche 3b abgewandten Seite eine konkav gekrümmte Form auf, sodass sich der gewindefreie Schaftabschnitt 5c bei dem Anziehen der Befestigungsschraube 5 in den am weitesten von der seitlichen Anlagefläche 3b entfernten Bereich des gewindefreien Bohrungsabschnittes 6b bewegt und somit den Schneideinsatz 4 in der dritten Raumrichtung in wohlbestimmter Weise festlegt.

Bei der in den Fig. 11 a) und Fig. 11 b) dargestellten zweiten Abwandlung weist der gewindefreie Bohrungsabschnitt 6b ebenfalls eine längliche Ausbildung auf und ist auf der von der seitlichen Anlagefläche 3b abgewandten Seite konkav gekrümmt ausgebildet. Im Unterschied zu der zuvor beschriebenen Ausgestaltung ist der gewindefreie Bohrungsabschnitt 6b bei der zweiten Abwandlung allerdings nicht als Langloch ausgebildet, bei dem auch die der seitlichen Anlagefläche 3b zugewandte Seite konkav gekrümmt ist, sondern die der seitlichen Anlagefläche 3b zugewandte Seite verläuft im Wesentlichen senkrecht zu den Seitenwänden des gewindefreien Bohrungsabschnittes 6b.

Es ist unmittelbar ersichtlich, dass noch weitere Abwandlungen insbesondere auch der Form des gewindefreien Bohrungsabschnittes 6b möglich sind. Ferner kann der gewindefeie Bohrungsabschnitt 6b auch bei den Abwandlungen zusätzlich mit einer Kontaktfläche 6c versehen werden, wie sie mit Bezug auf die Weiterbildung der Ausführungsform beschrieben wurde.

## Patentansprüche

1. Werkzeug (1) für die zerspanende Bearbeitung mit
einem Grundkörper (2), der eine Rotationsachse (R) bestimmt, um die das Werkzeug im Betrieb rotiert,
zumindest einem an dem Grundkörper (2) ausgebildeten Sitz (3) zur Aufnahme eines auswechselbaren Schneideinsatzes (4),
einer Befestigungsschraube (5) zur Befestigung des Schneideinsatzes (4) an dem Sitz (3), und
einem an dem Sitz (3) befestigten Schneideinsatz (4),
wobei der Sitz (3) eine Grundfläche (3a) zur Auflage einer Unterseite des Schneideinsatzes (4) und eine seitliche Anlagefläche (3b) zur Anlage einer Seitenfläche des Schneideinsatzes (4) aufweist und in der Grundfläche (3a) eine Bohrung (6) zur Aufnahme der Befestigungsschraube (5) ausgebildet ist,
wobei die Bohrung (6) beabstandet von der Grundfläche (3a) eine Gewindebohrung (6a) und näher in Richtung der Grundfläche (3a) einen gewindefreien Bohrungsabschnitt (6b) aufweist,
wobei die Befestigungsschraube (5) einen Gewindeabschnitt (5a) zum Zusammenwirken mit der Gewindebohrung (6a), einen Kopfabschnitt (5b) zum Abstützen in einem Durchgangsloch (7) des Schneideinsatzes (4) und zwischen dem Gewindeabschnitt (5a) und dem Kopfabschnitt (5b) einen gewindefreien Schaftabschnitt (5c) aufweist, welcher gewindefreie Schaftabschnitt (5c) einen kleineren Querschnitt als der gewindefreie Bohrungsabschnitt (6b) aufweist,
wobei der Schneideinsatz (4) derart an dem Sitz (3) befestigt ist, dass sich der Kopfabschnitt (5b) der Befestigungsschraube (5) an dem Durchgangsloch (7) des Schneideinsatzes (4) abstützt, der Gewindeabschnitt (5a) der Befestigungsschraube (5) mit der Gewindebohrung (6a) zusammenwirkt und die Befestigungsschraube (5) derart elastisch ausgelenkt ist, dass der gewindefreie Schaftabschnitt (5c) an einer von der seitlichen Anlagefläche (3b) abgewandten Seite an dem gewindefreien Bohrungsabschnitt (6b) anliegt und an einer der seitlichen Anlagefläche (3b) zugewandten Seite von dem gewindefreien Bohrungsabschnitt (6b) beabstandet ist,
**dadurch gekennzeichnet, dass** der Sitz (3) frei von einer weiteren Anlagefläche zur Abstützung einer weiteren Seitenfläche des Schneideinsatzes (4) ist, der gewindefreie Bohrungsabschnitt (6b) in einer Richtung parallel zu der seitlichen Anlagefläche (3b) und senkrecht zu einer Längsachse der Befestigungsschraube (5) breiter als der Durchmesser des gewindefreien Schaftabschnitts (5c) der Befestigungsschraube (5) ist und
der gewindefreie Schaftabschnitt (5c) in der Richtung von der seitlichen Anlagefläche (3b) weg ausgelenkt ist.

2. Werkzeug nach Anspruch 1, wobei der Schneideinsatz (4) in einer Richtung, die sich senkrecht zu einer Flächennormalen der seitlichen Anlagefläche (3b) und senkrecht zu einer Flächennormalen der Grundfläche (3a) erstreckt, durch das Zusammenwirken des Kopfabschnittes (5b) der Befestigungsschraube (5) mit dem Durchgangsloch (7) des Schneideinsatzes (4) ausgerichtet ist.

3. Werkzeug nach Anspruch 1 oder 2, wobei der gewindefreie Bohrungsabschnitt (6b) auf der von der seitlichen Anlagefläche (3b) abgewandten Seite eine konkav gekrümmte Form aufweist.

4. Werkzeug nach einem der vorangehenden Ansprüche, wobei eine Flächennormale der seitlichen Anlagefläche (3b) überwiegend senkrecht zu der Rotationsachse (R) ausgerichtet ist.

5. Werkzeug nach einem der vorangehenden Ansprüche, wobei der gewindefreie Bohrungsabschnitt (6b) einen im Wesentlichen kreisförmigen Querschnitt aufweist.

6. Werkzeug nach einem der vorangehenden Ansprüche, wobei der gewindefreie Bohrungsabschnitt (6b) parallel zu der Gewindebohrung (6a) ausgebildet ist.

7. Werkzeug nach einem der vorangehenden Ansprüche, wobei der gewindefreie Bohrungsabschnitt (6b) koaxial zu der Gewindebohrung (6a) ausgebildet ist.

8. Werkzeug nach einem der vorangehenden Ansprüche, wobei sich der sich an dem Durchgangsloch (7) des Schneideinsatzes (4) abstützende Bereich des Kopfabschnitts (5b) der Befestigungsschraube (5) in Richtung des Gewindeabschnitts (5a) verjüngt.

9. Werkzeug nach einem der vorangehenden Ansprüche, wobei eine Längsachse (Z) der Gewindebohrung (6a) in einer Ebene des Kontakts zwischen dem Kopfabschnitt (5b) der Befestigungsschraube (5) und dem Durchgangsloch (7) des Schneideinsatzes (4) gegenüber der Längsachse (W) des Durchgangsloches (7) in Richtung zu der seitlichen Anlagefläche (3b) versetzt ist.

10. Werkzeug nach einem der vorangehenden Ansprüche, wobei der zumindest eine Sitz (3) derart ausgebildet ist, dass der darin befestigte Schneideinsatz (4) in axialer Richtung von dem Grundkörper (2) hervorsteht.

11. Werkzeug nach einem der vorangehenden Ansprüche, wobei das Werkzeug (1) eine Mehrzahl von spiralförmig entlang der Rotationsachse (R) angeordneten Sitzen (3) für Schneideinsätze (4) aufweist.

12. Werkzeug nach Anspruch 11, wobei das Werkzeug (1) eine Mehrzahl von spiralförmig umlaufenden Reihen von Sitzen (3) für Schneideinsätze (4) aufweist.

## Claims

1. A tool (1) for machining, having
a main body (2) that determines an axis of rotation (R) about which the tool rotates in operation,
at least one seat (3), formed on the main body (2), for receiving an exchangeable cutting insert (4),
a fastening screw (5) for fastening the cutting insert (4) to the seat (3), and a cutting insert (4) fastened to the seat (3),
wherein the seat (3) has a base surface (3a) for supporting an underside of the cutting insert (4) and a lateral bearing surface (3b) for a side face of the cutting insert (4) to bear against, and a bore (6) for receiving the fastening screw (5) is formed in the base surface (3a),
wherein the bore (6) has a threaded bore (6a) at a distance from the base surface (3a) and, closer toward the base surface (3a), a thread-free bore portion (6b),
wherein the fastening screw (5) has a threaded portion (5a) for engaging with the threaded bore (6a), a head portion (5b) to be supported in a through-hole (7) in the cutting insert (4), and a thread-free shank portion (5c) between the threaded portion (5a) and the head portion (5b), which thread-free shank portion (5c) has a smaller cross section than the thread-free bore portion (6b),
wherein the cutting insert (4) is fastened to the seat (3) in such a way that the head portion (5b) of the fastening screw (5) is supported on the through-hole (7) in the cutting insert (4), the threaded portion (5a) of the fastening screw (5) engages with the threaded bore (6a) and the fastening screw (5) is elastically deflected in such a way that the thread-free shank portion (5c) bears against the thread-free bore portion (6b) on a side remote from the lateral bearing surface (3b) and is spaced apart from the thread-free bore portion (6b) on a side facing the lateral bearing surface (3b),
**characterized in that** the seat (3) is free of a further bearing surface for supporting a further side face of the cutting insert (4), the thread-free bore portion (6b) is wider, in a direction parallel to the lateral bearing surface (3b) and perpendicular to a longitudinal axis of the fastening screw (5), than the diameter of the thread-free shank portion (5c) of the fastening screw (5), and
the thread-free shank portion (5c) is deflected in the direction away from the lateral bearing surface (3b).

2. The tool as claimed in claim 1, wherein the cutting insert (4) is oriented in a direction which extends perpendicularly to a surface normal of the lateral bearing surface (3b) and perpendicularly to a surface normal of the base surface (3a) by the engagement of the head portion (5b) of the fastening screw (5) with the through-hole (7) in the cutting insert (4).

3. The tool as claimed in claim 1 or 2, wherein the thread-free bore portion (6b) has a concavely curved shape on the side remote from the lateral bearing surface (3b).

4. The tool as claimed in one of the preceding claims, wherein a surface normal of the lateral bearing surface (3b) is oriented predominantly perpendicularly to the axis of rotation (R).

5. The tool as claimed in one of the preceding claims, wherein the thread-free bore portion (6b) has a substantially circular cross section.

6. The tool as claimed in one of the preceding claims, wherein the thread-free bore portion (6b) is formed parallel to the threaded bore (6a).

7. The tool as claimed in one of the preceding claims, wherein the thread-free bore portion (6b) is formed coaxially with the threaded bore (6a).

8. The tool as claimed in one of the preceding claims, wherein that region of the head portion (5b) of the fastening screw (5) that is supported on the through-hole (7) in the cutting insert (4) narrows in the direction of the threaded portion (5a).

9. The tool as claimed in one of the preceding claims, wherein a longitudinal axis (Z) of the threaded bore (6a) is offset toward the lateral bearing surface (3b) with respect to the longitudinal axis (W) of the through-hole (7), in a plane of contact between the head portion (5b) of the fastening screw (5) and the through-hole (7) in the cutting insert (4).

10. The tool as claimed in one of the preceding claims, wherein the at least one seat (3) is formed in such a way that the cutting insert (4) fastened therein protrudes from the main body (2) in an axial direction.

11. The tool as claimed in one of the preceding claims, wherein the tool (1) has a plurality of seats (3), arranged spirally along the axis of rotation (R), for cutting inserts (4).

12. The tool as claimed in claim 11, wherein the tool (1) has a plurality of spirally encircling rows of seats (3) for cutting inserts (4).

## Revendications

1. Outil (1) pour l'usinage par enlèvement de copeaux, comprenant
un corps de base (2) qui définit un axe de rotation (R) autour duquel tourne l'outil pendant le fonctionnement,
au moins un siège (3) réalisé au niveau du corps de base (2) pour recevoir un insert de coupe remplaçable (4),
une vis de fixation (5) pour la fixation de l'insert de coupe (4) sur le siège (3), et
un insert de coupe (4) fixé sur le siège (3),
le siège (3) présentant une surface de base (3a) pour l'appui d'un côté inférieur de l'insert de coupe (4) et une surface d'appui latérale (3b) pour l'appui d'une surface latérale de l'insert de coupe (4), et un alésage (6) étant réalisé dans la surface de base (3a) pour recevoir la vis de fixation (5),
l'alésage (6) présentant, à distance de la surface de base (3a), un alésage fileté (6a) et, plus près dans la direction de la surface de base (3a), une portion d'alésage sans filetage (6b),
la vis de fixation (5) présentant une portion filetée (5a) destinée à coopérer avec l'alésage fileté (6a), une portion de tête (5b) pour le support dans un trou de passage (7) de l'insert de coupe (4) et, entre la portion filetée (5a) et la portion de tête (5b), une portion de tige sans filetage (5c), laquelle portion de tige sans filetage (5c) présentant une plus petite section transversale que la portion d'alésage sans filetage (6b),
l'insert de coupe (4) étant fixé au siège (3) de telle sorte que la portion de tête (5b) de la vis de fixation (5) s'appuie sur le trou de passage (7) de l'insert de coupe (4), que la portion filetée (5a) de la vis de fixation (5) coopère avec l'alésage fileté (6a) et que la vis de fixation (5) soit déviée élastiquement de telle sorte que la portion de tige sans filetage (5c) s'applique, au niveau d'un côté opposé à la surface d'appui latérale (3b), contre la portion d'alésage sans filetage (6b) et, au niveau d'un côté tourné vers la surface d'appui latérale (3b), soit espacée de la portion d'alésage sans filetage (6b),
**caractérisé en ce que** le siège (3) est exempt d'une surface d'appui supplémentaire pour le support d'une surface latérale supplémentaire de l'insert de coupe (4), la portion d'alésage sans filetage (6b), dans une direction parallèle à la surface d'appui latérale (3b) et perpendiculaire à un axe longitudinal de la vis de fixation (5), est plus large que le diamètre de la portion de tige sans filetage (5c) de la vis de fixation (5) et
la portion de tige sans filetage (5c) est déviée dans une direction à l'écart de la surface d'appui latérale (3b).

2. Outil selon la revendication 1, dans lequel l'insert de coupe (4) est orienté dans une direction qui s'étend perpendiculairement à une normale à la surface d'appui latérale (3b) et perpendiculairement à une normale à la surface de base (3a), par coopération de la portion de tête (5b) de la vis de fixation (5) avec le trou de passage (7) de l'insert de coupe (4).

3. Outil selon la revendication 1 ou 2, dans lequel la portion d'alésage sans filetage (6b) présente une forme à courbure concave sur le côté opposé à la surface d'appui latérale (3b).

4. Outil selon l'une quelconque des revendications précédentes, dans lequel une normale à la surface d'appui latérale (3b) est orientée essentiellement perpendiculairement à l'axe de rotation (R).

5. Outil selon l'une quelconque des revendications précédentes, dans lequel la portion d'alésage sans filetage (6b) présente une section transversale essentiellement circulaire.

6. Outil selon l'une quelconque des revendications précédentes, dans lequel la portion d'alésage sans filetage (6b) est réalisée parallèlement à l'alésage fileté (6a).

7. Outil selon l'une quelconque des revendications précédentes, dans lequel la portion d'alésage sans filetage (6b) est réalisée coaxialement à l'alésage fileté (6a).

8. Outil selon l'une quelconque des revendications précédentes, dans lequel la région de la portion de tête (5b) de la vis de fixation (5) s'appuyant sur le trou de passage (7) de l'insert de coupe (4) se rétrécit dans la direction de la portion filetée (5a) .

9. Outil selon l'une quelconque des revendications précédentes, dans lequel un axe longitudinal (Z) de l'alésage fileté (6a) dans un plan du contact entre la portion de tête (5b) de la vis de fixation (5) et le trou de passage (7) de l'insert de coupe (4) est décalé par rapport à l'axe longitudinal (W) du trou de passage (7) dans la direction de la surface d'appui latérale (3b).

10. Outil selon l'une quelconque des revendications précédentes, dans lequel l'au moins un siège (3) est réalisé de telle sorte que l'insert de coupe (4) fixé dans celui-ci fasse saillie dans la direction axiale depuis le corps de base (2).

11. Outil selon l'une quelconque des revendications précédentes, l'outil (1) présentant une pluralité de siège (3) disposés en spirale le long de l'axe de rotation (R) pour des inserts de coupe (4).

12. Outil selon la revendication 11, l'outil (1) présentant une pluralité de rangées de sièges (3) disposées en spirale sur la périphérie pour des inserts de coupe (4).
